(19) Europäisches Patentamt
European Patent Office
Office européen des brevets

(11) **EP 4 618 439 A1**

(12) **EUROPEAN PATENT APPLICATION**
published in accordance with Art. 153(4) EPC

(43) Date of publication:
**17.09.2025  Bulletin 2025/38**

(21) Application number: 23903827.6

(22) Date of filing: **28.11.2023**

(51) International Patent Classification (IPC):
**H04B 7/08** (2006.01)      **H04B 7/0413** (2017.01)
**H04L 5/00** (2006.01)      **H04L 25/02** (2006.01)
**H04L 25/03** (2006.01)

(52) Cooperative Patent Classification (CPC):
**H04B 7/0413; H04B 7/08; H04L 5/00; H04L 25/02;
H04L 25/03**

(86) International application number:
**PCT/KR2023/019385**

(87) International publication number:
**WO 2024/128624 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 16.12.2022  KR 20220177603
20.01.2023  KR 20230008811

(71) Applicant: **Samsung Electronics Co., Ltd.**
**Suwon-si, Gyeonggi-do 16677 (KR)**

(72) Inventors:
• **SEO, Juhwan**
**Suwon-si Gyeonggi-do 16677 (KR)**
• **KIM, Kyeongyeon**
**Suwon-si Gyeonggi-do 16677 (KR)**
• **CHOI, Sangwon**
**Suwon-si Gyeonggi-do 16677 (KR)**

(74) Representative: **HGF**
**HGF Limited**
**1 City Walk**
**Leeds LS11 9DX (GB)**

(54) **ELECTRONIC DEVICE AND METHOD FOR PROCESSING RECEIVED SIGNAL IN WIRELESS COMMUNICATION SYSTEM**

(57)    According to an embodiment, a method performed by an electronic device comprises a step for obtaining a signal on a plurality of resource blocks (RBs). The method comprises a step for dividing the plurality of RBs into a plurality of first RB groups. The method comprises a step for obtaining a first noise covariance matrix related to the plurality of first RB groups. The method comprises a step for dividing the plurality of RBs into a plurality of second RB groups on the basis of the first noise covariance matrix. The method comprises a step for obtaining a second noise covariance matrix related to the plurality of second RB groups. The method comprises a step for obtaining information corresponding to the signal on the basis of the second noise covariance matrix.

| RB index | User | Interference | Fix RBG(4RB) | Proposed RBG |
|----------|------|--------------|--------------|--------------|
| 0 | | | $RBG^{init}(0)$ | $RBG^{new}(0)$ |
| 1 | | | | |
| 2 | | Interference | | $RBG^{new}(1)$ |
| 3 | UE 0 | | | |
| 4 | | | $RBG^{init}(1)$ | |
| 5 | | | | $RBG^{new}(2)$ |
| 6 | | | | |
| 7 | | | | |

FIG. 10A

EP 4 618 439 A1

## Description

**[Technical Field]**

The present disclosure relates to a wireless communication system, and more particularly, relates to an electronic device and a method for processing a signal received in the wireless communication system.

**[Background Art]**

In order to improve transmission and reception performance of a signal, multiple-input multiple-output (MIMO) technology is used. A wireless communication system using the MIMO technology uses multiple antennas at both a transmitting end and a receiving end. A channel capacity of the wireless communication system using the MIMO technology may be significantly improved compared to single antenna technology.

**[Disclosure]**

**[Technical Solution]**

According to an embodiment, a method performed by an electronic device, may comprise obtaining a signal on a plurality of resource blocks (RBs). The method may comprise dividing the plurality of RBs into a plurality of first RB groups. The method may comprise obtaining a first noise covariance matrix related to the plurality of first RB groups. The method may comprise dividing, based on the first noise covariance matrix, the plurality of RBs into a plurality of second RB groups. The method may comprise obtaining a second noise covariance matrix related to the plurality of second RB groups. The method may comprise obtaining, based on the second noise covariance matrix, information corresponding to the signal.

According to an embodiment, an electronic device may comprise at least one processor, and a transceiver. The at least one processor may be configured to obtain a signal on a plurality of resource blocks (RBs). The at least one processor may be configured to divide the plurality of RBs into a plurality of first RB groups. The at least one processor may be configured to obtain a first noise covariance matrix related to the plurality of first RB groups. The at least one processor may be configured to divide, based on the first noise covariance matrix, the plurality of RBs divided into the plurality of first RB groups, into a plurality of second RB groups. The at least one processor may be configured to obtain a second noise covariance matrix related to the plurality of second RB groups. The at least one processor may be configured to obtain, based on the second noise covariance matrix, information corresponding to the signal.

**[Description of the Drawings]**

FIG. 1 illustrates a wireless communication system.
FIG. 2 illustrates a fronthaul interface.
FIG. 3 illustrates an example of a resource structure in a time domain and a frequency domain.
FIG. 4 illustrates an example of channels in a communication standard.
FIG. 5 illustrates an example of a demodulation reference signal (DMRS) in a slot.
FIG. 6 illustrates a flowchart of an operation of an electronic device for correcting an estimation error of a noise covariance matrix.
FIG. 7 illustrates a flowchart of an operation of an electronic device for obtaining noise covariance in an RBG area.
FIG. 8 illustrates an algorithm for setting a new RBG.
FIG. 9 illustrates a flowchart of an operation of an electronic device for performing a covariance shrinkage scheme.
FIG. 10A illustrates an example in which a new RBG is configured in a sub-band interference environment.
FIG. 10B illustrates an example of graphs indicating MSE performance for an initial RBG and a new RBG in a sub-band interference environment.
FIG. 11A illustrates an example in which a new RBG is configured in a full-band interference environment.
FIG. 11B illustrates an example of graphs indicating MSE performance for an initial RBG and a new RBG in a full-band interference environment.
FIG. 12 illustrates a flowchart of an operation of an electronic device.
FIG. 13 illustrates an example of a functional configuration of an electronic device.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a symbol, a message, a signaling, a reference signal (RS), and data), a term referring to a resource (e.g., a symbol, a slot, a subframe, a radio frame, a subcarrier, a resource element (RE), a resource block (RB), a bandwidth part (BWP), and an occasion), a term for a calculation state (e.g., a step, computation, and a procedure), a term referring to data (e.g., a packet, a user stream, information, a bit, a symbol, a codeword), a term referring to a channel, a term referring to network entities, a term referring to a component of a device and the like, used in the following description are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

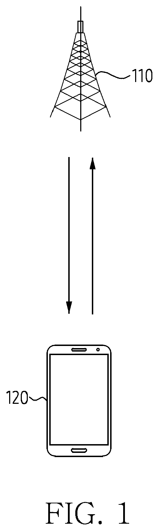

FIG. 1 illustrates a wireless communication system.

Referring to FIG. 1, FIG. 1 exemplifies a base station 110 and a terminal 120 as a portion of nodes using a wireless channel in the wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to the base station, the base station 110 may be referred to as an access point (AP), an eNodeB (eNB), an 5th generation node, a next generation nodeB (gNB), a wireless point, a transmission/reception point (TRP), or another term having an equivalent technical meaning.

The terminal 120, which is a device used by a user, performs communication with the base station 110 through a wireless channel. A link facing from the base station 110 to the terminal 120 is referred to as a downlink (DL), and a link facing from the terminal 120 to the base station 110 is referred to as an uplink (UL). Additionally, although not illustrated in FIG. 1, the terminal 120 and another terminal may perform communication with each other through a wireless channel. At this time, a device-to-device link (D2D) between the terminal 120 and the other terminal is referred to as a sidelink, and the sidelink may be used interchangeably with a PC5 interface. In some other embodiments, the terminal 120 may be operated without user involvement. According to an embodiment, the terminal 120, which is a device that performs machine type communication (MTC), may not be carried by the user. Additionally, according to an embodiment, the terminal 120 may be a narrowband (NB)-internet of things (IoT) device.

In addition to a terminal, the terminal 120 may be referred to as user equipment (UE), customer premises equipment (CPE), a mobile station, a subscriber station, a remote terminal, a wireless terminal, an electronic device or a user device, or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). Additionally, the base station 110 and the terminal 120 may transmit and receive a wireless signal in a relatively high frequency band (e.g., an FR 2 (or an FR 2-1, an FR 2-2, an FR 2-3), and an FR 3 of the NR or an mmWave band (e.g., 28GHz, 30GHz, 38GHz, or 60GHz)). To improve a channel gain, the base station 110 and the terminal 120 may perform beamforming. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search procedure or a beam management procedure. After the serving beams are selected, subsequent communication may be performed through a resource that is in a QCL relationship with a resource that has transmitted the serving beams.

When large-scale characteristics of a channel transferring a symbol on a first antenna port may be inferred from a channel transferring a symbol on a second antenna port, the first antenna port and the second antenna port may be evaluated to be in a QCL relationship. For example, the large-scale characteristics may include at least one of a delay spread, a doppler spread, a doppler shift, an average gain, an average delay, and a spatial receiver parameter.

In FIG. 1, although both the base station 110 and the terminal 120 are described to perform the beamforming, embodiments of the present disclosure are not necessarily limited thereto. In some embodiments, the terminal may perform or may not perform the beamforming. Additionally, the base station may perform or may not perform the beamforming. That is, only one of the base station and the terminal may perform the beamforming, or both the base station and the terminal may not perform the beamforming.

In the present disclosure, a beam means a spatial flow of a signal in a wireless channel and may be formed by one or more antennas (or antenna elements), and this formation process may be referred to as beamforming. The beamforming may include at least one of analog beamforming or digital beamforming (e.g., a precoding). A reference signal transmitted based on the beamforming may, as an example, include a demodulation-reference signal (DM-RS), a channel state information-reference signal (CSI-RS), a synchronization signal/physical broadcast channel (SS/PBCH), a sounding reference signal (SRS). Additionally, an IE such as a CSI-RS resource or an SRS-resource, and the like may be used as a configuration for each reference signal, and this configuration may include information associated with a beam. The information associated with the beam may mean whether a corresponding configuration (e.g., a CSI-RS resource) uses the same spatial domain filter as another configuration (e.g., another CSI-RS resource in the same CSI-RS resource set) or a different spatial domain filter, or which reference signal is quasi-co-located (QCL), and if it is QCL, which type (e.g., QCL type A, B, C, or D).

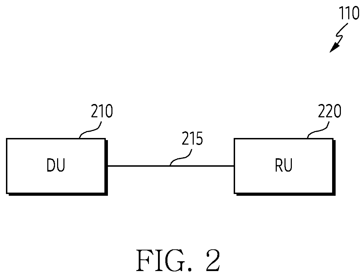

FIG. 2 illustrates a fronthaul interface. Unlike a backhaul between a base station and a core network, the fronthaul refers to a gap of entities between a wireless LAN and the base station. In FIG. 2, an example of a fronthaul structure between a DU 210 and one RU 220 is illustrated, but this is only for convenience of explanation and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. Additionally, an embodiment of the present disclosure may also be applied to a fronthaul structure between one DU and three RUs.

Referring to FIG. 2, a base station 110 may include the DU 210 and the RU 220. A front hole 215 between the DU 210 and the RU 220 may be operated through an $F_x$ interface. For the operation of the front hole 215, for example, an interface such as an enhanced common public radio interface (eCPRI) and a radio over ethernet (ROE) may be used.

As communication technology advances, mobile data traffic increases, and accordingly, a bandwidth requirement required by a fronthaul between a digital unit and a wireless unit has significantly increased. In deployment such as a centralized/cloud radio access network (C-RAN), a DU performs functions for a packet data convergence protocol (PDCP), a radio link control (RLC), a media access control (MAC), and a physical (PHY), and an RU may be implemented to perform more functions for a PHY layer in addition to a radio frequency (RF) function.

The DU 210 may be responsible for an upper layer function of a wireless network. For example, the DU 210 may perform a function of a MAC layer and a portion of a PHY layer. Herein, the portion of the PHY layer is performed at a higher step among functions of the PHY layer, and, may include, as an example, channel encoding (or channel decoding), scrambling (or descrambling), modulation (or demodulation), layer mapping (or layer demapping). According to an embodiment, in case that the DU 210 complies with an O-RAN standard, it may be referred to as an O-RAN DU (O-DU). The DU 210 may be represented by being replaced with a first network entity for a base station (e.g., a gNB) in embodiments of the present disclosure as needed.

The RU 220 may be responsible for a lower layer function of a wireless network. For example, the RU 220 may perform a portion of the PHY layer and an RF function. Herein, the portion of the PHY layer is performed at a relatively lower step than the DU 210 among the functions of the PHY layer, and may include, as an example, an iFFT conversion (or a FFT conversion), CP insertion (CP removal), and digital beamforming. The RU 220 may be referred to as an access unit (AU), an access point (AP), a transmission/reception point (TRP), a remote radio head (RRH), a radio unit (RU), or another term having an equivalent technical meaning. According to an embodiment, in case that the RU 220 complies to an O-RAN standard, it may be referred to as an O-RAN RU (O-RU). The RU 220 may be represented by being replaced with a second network entity for the base station (e.g., the gNB) in embodiments of the present disclosure as needed.

In FIG. 2 it has been described that the base station 110 includes the DU 210 and the RU 220, embodiments of the present disclosure are not limited thereto. According to embodiments, the base station may be implemented as distributed deployment according to a centralized unit (CU) configured to perform a function of upper layers (e.g., a packet data convergence protocol (PDCP), and a radio resource control (RRC)) of an access network, and a distributed unit (DU) configured to perform a function of a lower layer. At this time, the distributed unit (DU) may include the digital unit (DU) and the radio unit (RU) of FIG. 1. Between a core (e.g., a 5G core (5GC) or an NGC (next generation core)) network and a wireless network (RAN), the base station may be implemented in a structure in which the CU, the DU, and the RU are disposed in that order. An interface between the CU and the distributed unit (DU) may be referred to as an F1 interface.

A centralized unit (CU) may be responsible for a function of a higher layer than the DU by being connected to one or more DUs. For example, the CU may be responsible for a function of the radio resource control (RRC) and a packet data convergence protocol (PDCP) layer, and the DU and the RU may be responsible for a functions of a lower layer. The DU may perform some functions (high PHY) of the radio link control (RLC), the media access control (MAC), and the physical (PHY) layer, and the RU may be responsible for remaining functions (low PHY) of the PHY layer. Additionally, as an example, a digital unit (DU) may be included in a distributed unit (DU) according to distributed deployment implementation of the base station. Hereinafter, operations of the digital unit (DU) and the RU are described unless otherwise defined, but various embodiments of the present disclosure may be applied to both base station deployment including the CU or deployment (i.e., implemented by integrating the CU and the DU into a base station(e.g., an NG-RAN node), which one entity) in which the DU are directly connected to the core network.

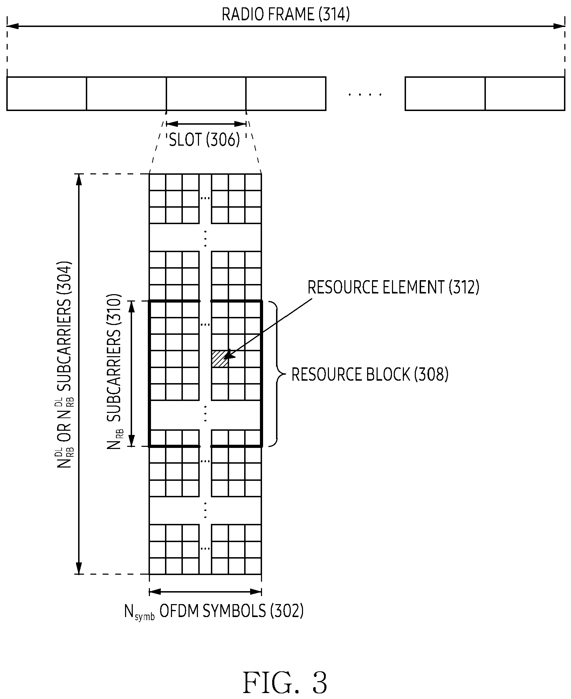

FIG. 3 illustrates an example of a resource structure in a time domain and a frequency domain. FIG. 3 illustrates a basic structure of a time-frequency domain, which is a radio resource domain in which data or a control channel is transmitted in a downlink or an uplink.

Referring to FIG. 3, a horizontal axis indicates a time domain and a vertical axis indicates a frequency domain. A minimum transfer unit in the time domain is an OFDM symbol, and a slot 306 is configured by grouping $N_{symb}$ OFDM symbols 302. A length of a subframe is defined as 1.0 ms, and a length of a radio frame 314 is defined as 10 ms. A minimum transfer unit in the frequency domain is a subcarrier, and carrier bandwidth that configures a resource grid is configured with $N_{BW}$ subcarriers 304.

A basic unit of a resource in a time-frequency domain, which is a resource element (hereinafter 'RE') 312, may be indicated as an OFDM symbol index and a subcarrier index. A resource block may include a plurality of resource elements. In an LTE system, the resource block (RB) (or a physical resource block, hereinafter ' PRB ') is defined as $N_{symb}$ consecutive OFDM symbols in the time domain and $N_{SC}^{RB}$ consecutive subcarriers in the frequency domain. In an NR system, a resource block (RB) 308 may be defined as $N_{SC}^{RB}$ consecutive subcarriers 310 in the frequency domain. The RB 308 includes $N_{SC}^{RB}$ REs 312 in a frequency axis. In general, a minimum transfer unit of data is an RB and the number of subcarriers is $N_{SC}^{RB}=12$. The frequency domain may include common resource blocks (CRBs). The physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transfer bandwidth and an uplink transfer bandwidth may be different each other, in case of a frequency division duplex (FDD) system, which operates by dividing a downlink and an uplink in a frequency. A channel bandwidth indicates a radio frequency (RF) bandwidth corresponding to a system transfer bandwidth. [Table 1] indicates a portion of a correspondence relationship between a system transfer bandwidth, subcarrier spacing (SCS) and a channel bandwidth defined in an NR system in a frequency band (e.g., a frequency range (FR) 1 (310 MHz to 7125 MHz)) lower than x GHz. In addition, [Table 2] indicates a portion of a correspondence relationship between a transfer bandwidth, subcarrier spacing, and a channel bandwidth defined in an NR system in a frequency band (e.g., a FR2 (24250 MHz - 52600 MHz) or a FR2-2 (52600 MHz to 71,000 MHz) higher than y GHz. For example, in an NR system having a 100 MHz channel bandwidth at 30 kHz subcarrier spacing transfer bandwidth is configured with 273 RBs. In [Table 1] and [Table 2], an N/A may be a bandwidth-subcarrier combination that is not supported in an NR system.

[Table 1]

| Channel bandwidth [MHz] | SCS | 5 | 10 | 20 | 50 | 80 | 100 |
|---|---|---|---|---|---|---|---|
| Transfer configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transfer bandwidth configuration NRB | 60kH | 66 | 132 | 264 | N/A |
| | 120kHz | 32 | 66 | 132 | 264 |

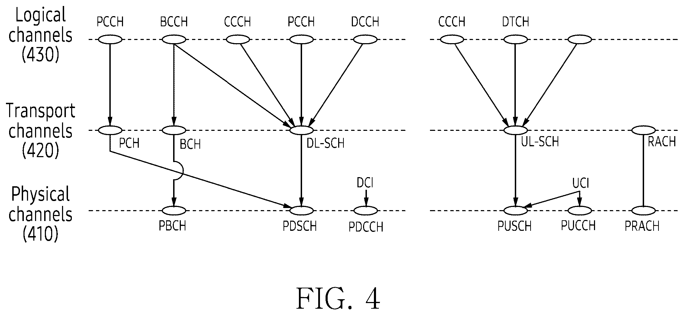

FIG. 4 illustrates an example of channels in a communication standard. The channels may include a physical channel 410, a transport channel 420, and a logical channel 430 according to layers defined in a communication standard.

Referring to FIG. 4, the physical channel 410 may provide functions (e.g., channel coding, HARQ processing, modulation, multi-antenna processing, resource mapping) necessary to generate physical signals in a physical layer. In the physical layer, the physical signals may be modulated in an OFDM method and may be transmitted in a wireless environment through a time-frequency resource (e.g., a resource in the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may mean symbols transmitted through the PDCCH. Additionally, in downlink, in addition to the channels illustrated in FIG. 4, an SS/PBCH block including a synchronization signal (e.g., a primary synchronization signal (PSS), and a secondary synchronization signal (SSS)), and a broadcast signal (e.g., the PBCH) may be transmitted for synchronization. Additionally, in downlink, a channel state information-reference signal (CSI-RS) for obtaining measurement or channel information, a demodulation reference signal (DMRS) for a channel estimation and demodulation, and a phase tracking reference signal (PTRS) may be transmitted from the downlink.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may mean symbols corresponding to the UCI. For example, the UCI may include at least one of scheduling request (SR), a hybrid automatic request (HARQ)-acknowledge (ACK) bit(s), or channel state information (CSI). Additionally, in uplink, in addition to the channels illustrated in FIG. 4, the DMRS and the PTRS for a channel estimation and demodulation may be transmitted from the downlink for the channel estimation.

The transport channel 420 may connect a physical layer and a medium access channel (MAC) layer located at a higher level of the physical layer, and may be divided according to how data is transmitted through a wireless interface. In downlink, the transport channel 420 may include at least one of a paging channel (PCH) for paging, a broadcast channel (BCH) for broadcasting system information, or a downlink shared channel (DL-SCH) for transporting downlink data. In uplink, the transport channel 420 may include at least one of a random access channel (RACH) for transport of a random access preamble or an uplink shared channel (UL-SCH) for transport of downlink data.

The logical channel 430 is located above a transport channel and is mapped to the transport channel 420. The logical channel 430 may be divided into a control channel for transferring control area information and a traffic channel for transferring user area information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, data may mean sequences other than a reference signal. As an example, data obtained by a receiver in uplink communication may mean signals transferred through the PUSCH. However, the PUSCH is an example, and embodiments of the present disclosure may also be applied to other channels (e.g., the PDSCH, the PBCH, the PDCCH, and the PUCCH) that require a channel estimation.

Multiple-input multiple-output (MIMO) technology is a field that has recently attracted great attention, and active research is currently underway. Assume a situation in which a channel between a transmitting antenna and a receiving antenna is independent, the number of transmitting antennas and the number of receiving antennas are all the same as M, and a bandwidth and total transmission power are fixed. In this situation, an average channel capacity increases by approximately M times compared to a single antenna. For example, in a MIMO environment, a reception method may include a minimum mean-square error (MMSE) or a maximum ratio combine (MRC). In the present disclosure, a whitening scheme that may improve performance of the reception method (e.g., the MMSE, the MRC) is described based on both interference of another cell and an adaptive white gaussian noise (AWGN) when receiving a signal. In order to describe the above-described whitening scheme, a reception situation of uplink transmission (e.g., PUSCH transmission) in an LTE communication system or an NR communication system is described as an example, but embodiments of the present disclosure are not limited thereto. In case of receiving signals according to another communication system (e.g., IEEE 802.11 or 802.16e), embodiments of the present disclosure may also be applied.

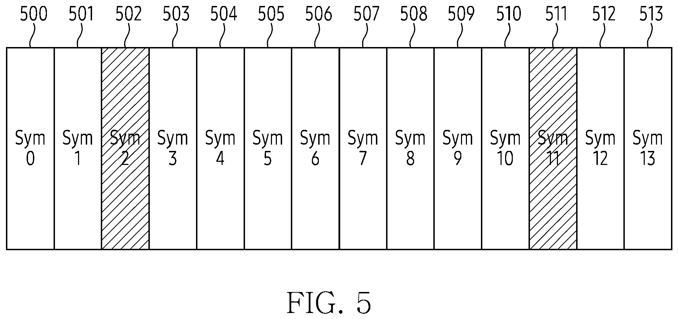

FIG. 5 illustrates an example of a demodulation reference signal (DMRS) in a slot. The DMRS is a reference signal (RS) used to demodulate data. The DMRS may be used to estimate a channel to demodulate data (e.g., a PDSCH and a PUSCH) and obtain a result of a channel estimation. Hereinafter, in order to describe operations using the channel estimation and the DMRS for channel estimation of the present disclosure, uplink transmission of an NR communication system will be described as an example. However, embodiments of the present disclosure are not limited to uplink of the NR communication system. Of course, embodiments of the present disclosure may also be applied to downlink or another communication system.

Referring to FIG. 5, a base station (e.g., a base station 110) may receive a signal from a terminal (e.g., a terminal 120). The terminal 120 may transmit an uplink signal to the base station 110. The received signal may include data (hereinafter, reception data) received on an uplink channel (e.g., the PUSCH). The reception data may be transmitted in data symbols of a time domain. Additionally, the received signal may include reference signals (hereinafter, reception reference signals) (e.g., the DMRS) for a channel estimation and coherent demodulation of the data symbols. The reception reference signals may be transmitted in DMRS symbols of a time domain. The base station 110 may receive, from the terminal 120, the reception data in the data symbols of a slot and receive the reception reference signals in the DMRS symbols. The slot may include 14 symbols (e.g., a symbol #0 500, a symbol #1 501, a symbol #2 502, a symbol #3 503, a symbol #4 504, a symbol #5 505, a symbol #6 506, a symbol #7 507, a symbol #8 508, a symbol #9 509, a symbol #10 510, a symbol #11 511, a symbol #12 512, and a symbol #13 513). At least a portion of the 14 symbols may be used to carry DMRS sequences. For example, a section of the symbol #2 502 and a section of the symbol #11 511 may include the DMRS symbols.

The base station 110 may estimate a channel between the base station 110 and the terminal 120 through the reception reference signals. The base station 110 may obtain information on a channel experienced by the reception reference signals. For example, the base station 110 may obtain information on the channel experienced by the reception data through a relationship between a location where the DMRS symbols of the reception reference signals are mapped and locations where data symbols of the reception data are mapped. As an example, the base station 110 may obtain information on the channel experienced by the reception data by performing interpolation in a frequency domain or interpolation in a time domain based on information on the channel experienced by the reception reference signals. However, since the number of data symbols in one slot, which is a transfer unit, is generally greater than the number of DMRS symbols, an operation of estimating a channel experienced by each of the data symbols may require a large amount of computation. In addition, since a computation of the DMRS symbols themselves or inter-cell interference is not reflected, reception performance may not be guaranteed. To this end, the base station 110, which is a reception end, may utilize various reception schemes.

An estimation signal for a data signal may be obtained by applying a signal combining scheme to reception signals received through a plurality of receiving antennas. For example, the signal combining scheme may include a maximal ratio combining (MRC), a selective combining, or an equal gain combining. The MRC scheme is a method of combining each data by giving a weight to it. The selection combining scheme is a method of selectively combining data, and the equal gain combining scheme is a method of giving each data the same weight and combining each data through an average value.

The MRC scheme is a reception scheme that uses diversity of a signal received through multiple paths in a system using multiple antennas, and is known to show optimal performance in a noise-limited environment with a high signal to interference plus noise ratio (SINR). However, an estimation signal obtained using the MRC scheme does not consider influence of an interference signal of an adjacent cell. Additionally, in an actual multi-cell environment, a terminal located at a cell boundary is affected by the adjacent cell and has a low SINR. Therefore, the terminal located at the cell boundary in the multi-cell environment may not be able to obtain optimal performance using the MRC scheme. In a cellular system (e.g., a long term evolution (LTE) communication system of a 3rd generation partnership project (3GPP) or a new radio (NR) communication system), interference from another cell as well as AWGN may exist. A noise component may include interference from the AWGN and the other cell. In an environment where the interference exists, performance of an MRC receiver using whitening is superior to performance of a general MRC receiver. On the contrary, in an environment where interference does not exist, the performance of the MRC receiver using whitening is the same as the performance of the general MRC receiver. However, for an implementation reason, the performance of the MRC receiver using whitening may be deteriorated compared to the performance of the general MRC receiver. Hereinafter, the MRC receiver using whitening may have a structure in which a block for applying a whitening matrix is added to the MRC receiver in order to receive a signal, such as in an MMES method.

Hereinafter, a technical feature related to MMSE reception of a broadcast communication system having multiple transmitting antennas may be described. For example, a technical feature for improving reception performance in an interference environment of various patterns may be proposed. An electronic device described below may be included in a base station. For example, the electronic device may be included in the DU 210 of FIG. 2, or may be a device that performs at least a portion or all of functions of the DU 210.

The present disclosure describes embodiments using terms used in some communication standards (e.g., a 3rd generation partnership project (3GPP)), but this is only an example for explanation. Various embodiments of the present disclosure may be easily modified and applied in other communication and broadcasting system.

According to an embodiment, when transmitting an uplink data channel (physical uplink shared channel (PUSCH)) signal in an interference environment, the number of antennas may be $N_{rx}$, and the number of layers may be $N_{layer}$. In this case, a reception signal in a k-th subcarrier may be represented as a following Equation.

【Equation 1】

$$\mathbf{y}(k) = \mathbf{H}(k)\mathbf{x}(k) + \mathbf{n}(k),$$

Referring to the Equation 1, $\mathbf{y}(k)$ is a reception signal vector of a size ($N_{layer} \times 1$) in the k-th subcarrier. $\mathbf{H}(k)$ is a channel matrix of a size ($N_{rx} \times N_{layer}$) corresponding to the $k$-th subcarrier. $\mathbf{x}(k)$ is a transmission signal vector of a size ($N_{layer} \times 1$) corresponding to the $k$-th subcarrier. $\mathbf{n}(k)$ is noise and interference vector of a size ($N_{rx} \times 1$).

In case that interference from another adjacent cell exists, a PUSCH reception performance of a device (or a user) being serviced may be deteriorated. The electronic device (e.g., an MMSE receiver) may perform equalization according to the following Equation.

【Equation 2】

$$\mathbf{W}(k)^H \mathbf{y}(k) = \widehat{\mathbf{H}}^H(k)\big(\widehat{\mathbf{H}}(k)\widehat{\mathbf{H}}^H(k) + \mathbf{R}_{nn}\big)^{-1}\mathbf{y}(k)$$

Referring to the Equation 2, $\mathbf{X}(k)^H$ means complex conjugate transpose of $\mathbf{X}(k)$. $\mathbf{w}(k)^H$ is a weight (e.g., a MMSE weight) of a size ($N_{rx} \times N_{layer}$). $\widehat{\mathbf{H}}(k)$ is an estimation channel matrix an electronic device of a size ($N_{rx} \times N_{layer}$) corresponding to the k-th subcarrier. $\mathbf{R_{nn}}$ indicates a covariance matrix of estimated noise of a size ($N_{rx} \times N_{rx}$) and an interference component. Hereafter, $\mathbf{R_{nn}}$ may be described as a noise covariance matrix.

In order to decrease influence of interference in the electronic device (e.g., the MMSE receiver), a high-accuracy estimation of the covariance matrix $\mathbf{R_{nn}}$ of interference and noise may be required. For example, in order to correct $\mathbf{R}_{nn}$ generated by a channel estimation error, a diagonal loading scheme such as the following Equation may be used.

【Equation 3】

$$\mathbf{D}_{nn} = \mathbf{R}_{nn} + \Delta_{\mathbf{nn}}$$

In the Equation 3, $\mathbf{D}_{nn}$ is a value corrected for $\mathbf{R_{nn}}$, which is the noise covariance matrix. $\Delta_{\mathbf{nn}}$ may be represented as the following Equation 4.

【Equation 4】

$$[\Delta_{\mathbf{nn}}]_{ii} = \delta\beta \frac{1}{M} \sum_{k=0}^{M-1} \left|\widehat{\mathbf{H}}(k)\right|^2, n = 0, \dots, N_{rx} - 1$$

$\widehat{\mathbf{H}}(k)$ is an estimated channel matrix, $\delta$ is a parameter for optimization, and $\beta$ is a doppler frequency.

According to an embodiment, the electronic device (e.g., the MMSE receiver) may estimate a channel through a channel estimator. The electronic device (e.g., the MMSE receiver) may measure (or obtain) $\mathbf{R_{nn}}$ through the disturbance estimator based on a result of the channel estimation. The electronic device (e.g., the MMSE receiver) may obtain (or calculate) $\mathbf{D}_{nn}$ by correcting $\mathbf{R_{nn}}$ based on noise and interference covariance, and the result of the channel estimation through an adaptation unit and a displacement unit.

According to an embodiment, an algorithm for improving a noise covariance matrix by using an estimated channel to obtain (or calculate) a noise covariance matrix, which is a covariance matrix of a noise component and an interference component. However, according to the algorithm, distortion of noise covariance may occur according to the number of samples for identifying (or obtaining or calculating) the noise covariance matrix. When the noise covariance matrix is identified (or obtained or calculated) using the finite number of samples, the distortion of the noise covariance may occur in case that the number of samples is not sufficient compared to the number of antennas. The distortion of the noise covariance may cause deterioration of interference performance of the MMSE receiver. Hereinafter, an example in which distortion of noise covariance occurs in a pre-whitening structure receiver may be described.

For example, equalization may be performed in the pre-whitening structure receiver according to the following Equation. The following Equation may be configured according to a matrix inversion lemma of the matrix of the Equation 2.

【Equation 5】

$$\mathbf{W}^H\mathbf{y} = \big(\widehat{\mathbf{H}}(k)^H \mathbf{R}_{nn}^{-1}\widehat{\mathbf{H}}(k) + \mathbf{I}\big)^{-1}\widehat{\mathbf{H}}(k)^H \mathbf{R}_{nn}^{-1}\mathbf{y} = \big(\widehat{\mathbf{H}}(k)^H \widetilde{\mathbf{H}}(k) + \mathbf{I}\big)^{-1}\widetilde{\mathbf{H}}(k)\mathbf{y}$$

Referring to Equation 5, $\widetilde{\mathbf{H}}(k) = \mathbf{R}_{nn}^{-1}\widehat{\mathbf{H}}(k)$.

According to the Equation 5, an inverse matrix computation of the noise covariance matrix $\mathbf{R_{nn}}$ should be performed. When the number of samples for obtaining (or calculating) the noise covariance is less than the number of antennas, which is a size of a dimension of a matrix, a rank deficient may occur. As the inverse matrix of the noise covariance matrix $\mathbf{R_{nn}}$ may not be obtained (or calculated) in case that the rank deficient occurs, performance degradation may occur. Such performance degradation occurs more as the number of antennas increases, such as in a Massive MIMO system, and as the number of RBs allocated to a terminal (or a user) is small, the smaller the number of samples used for obtaining (or calculating) the noise covariance matrix, the greater the performance degradation may occur.

Additionally, in order to obtain (or calculate) the noise covariance matrix $\mathbf{R_{nn}}$, the fixed number of samples may be used in a frequency axis. In case that there is no interference or a statistical feature of the interference does not change on the frequency axis, an estimation error of $\mathbf{R_{nn}}$ may increase, when the fixed number of samples are used than a case that as many REs are used for obtaining (or calculating) $\mathbf{R_{nn}}$. As the estimation error of $\mathbf{R_{nn}}$ increases, performance of the electronic device (e.g., the MMSE receiver) may decrease. On the other hand, even in a case that interference exists only in some RBs, or interference changes significantly in an RB unit, performance of the electronic device (e.g., the MMSE receiver) may be decreased as the $\mathbf{R_{nn}}$ estimation error increases.

In the following specification, a device and a method for minimizing an effect of interference and noise in various interference pattern environments may be proposed to compensate for decrease in performance of the electronic device (e.g., the MMSE receiver) according to the increase in the $\mathbf{R_{nn}}$ estimation error. Specifically, the electronic device (e.g., the MMSE receiver) may identify (or detect) a pattern of interference and noise and estimate a noise covariance matrix based on the identified pattern. The electronic device (e.g., the MMSE receiver) may reconfigure a noise covariance matrix to minimize an estimation error of the noise covariance matrix.

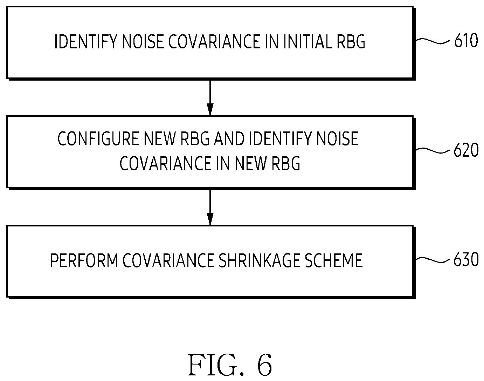

FIG. 6 illustrates a flowchart of an operation of an electronic device for correcting an estimation error of a noise covariance matrix. An operation 610 to an operation 630 may be performed in the electronic device (or a receiver) (e.g., a processor of the electronic device).

Referring to FIG. 6, in the operation 610 to the operation 630, the electronic device may set a sample area to enable obtaining of accurate noise covariance based on an estimated channel and a received signal. The electronic device may obtain (or calculate) noise covariance in the set sample area. The electronic device may correct an estimation error of noise covariance generated according to the number of samples. Specific operations of the operation 610 to the operation 630 will be described below.

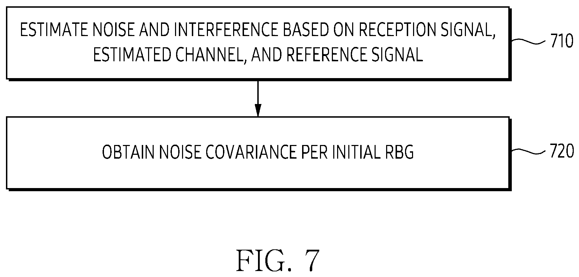

In the operation 610, the electronic device may set resource elements (REs) corresponding to RBs fixed in a predetermined number as a sample. The electronic device may obtain (or calculate) noise covariance based on the set sample. A specific operation of the operation 630 will be described later in FIG. 7.

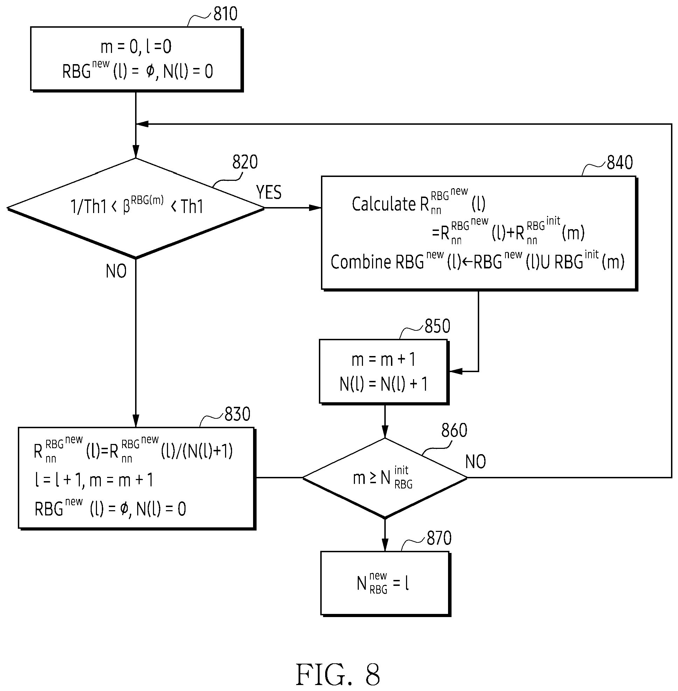

In an operation 620, the electronic device may configure a new resource block group (RBG) and may identify (or obtain) noise covariance in the new RBG. The electronic device may configure the new RBG instead of the RBGs configured in the operation 610. The electronic device may identify (or obtain) the noise covariance in the new RBG. A specific operation of the operation 620 will be described later in FIG. 8.

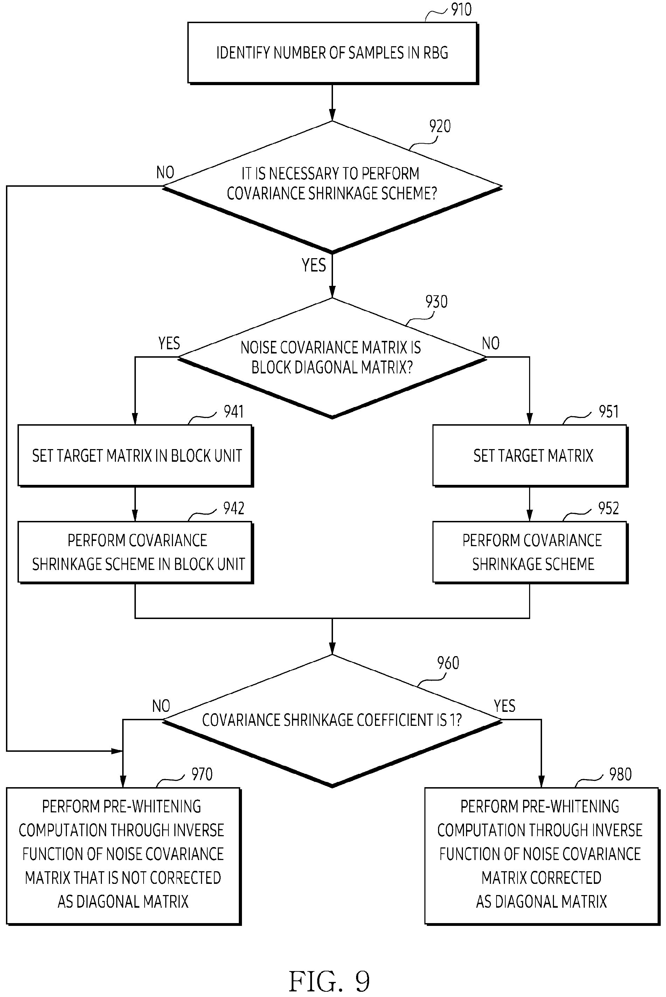

In the operation 630, the electronic device may perform a covariance shrinkage scheme. For example, the electronic device may perform the covariance shrinkage scheme based on identifying that the number (e.g., the number of samples in one RBG) of samples in one RBG is less than a threshold number. A specific operation of the operation 630 will be described later in FIG. 9.

FIG. 7 illustrates a flowchart of an operation of an electronic device for obtaining noise covariance in an RBG area. An operation 710 and an operation 720 of FIG. 7 may be related to the operation 610 of FIG. 6.

In an operation 710, the electronic device may estimate noise and interference based on a reception signal, an estimated channel, and a reference signal. For example, the electronic device may estimate noise and interference based on a reception signal, an estimated channel, and a reference signal according to set samples.

In the operation 720, the electronic device may obtain noise covariance per initial resource block group (RBG). For example, the electronic device may obtain noise covariance per initial RBG based on noise and interference estimated based on the reception signal, the estimated channel, and the reference signal.

According to an embodiment, a set of RBGs used in an initially set sample may be displayed as $\mathrm{RBG^{init}}(i), \ (i = 0, \ldots, N_{RBG}^{init} - 1)$. Each RBG may include the designated number of RBs in a consecutive RB. For example, each RBG may include the designated number of consecutive RBs.

For example, in case that 10 consecutive RBs are allocated, a size of $\mathrm{RBG^{init}}(i)$ may be set to 2 RBs. In this case, it is set as $N_{RBG}^{init} = 5$, and $\mathrm{RBG^{init}}(i), (i = 1, \ldots, 4)$ may be set as described in Table 3 below.

[Table 3]

| RB | RBG$^{init}$ |
|---|---|
| 0<br>1 | RBG$^{init}$(0) |
| 2<br>3 | RBG$^{init}$(1) |
| 4<br>5 | RBG$^{init}$(2) |
| 6<br>7 | RBG$^{init}$(3) |
| 8<br>9 | RBG$^{init}$(4) |

In case that RBG$^{init}$(*i*), (*i* = 1, ... ,4) is set as in Table 3, the electronic device may identify a noise vector to obtain (or calculate) noise covariance. A noise vector estimated through a reception signal corresponding to a *k*-th subcarrier and an -th DMRS symbol may be configured as in the following Equation.

【Equation 6】

$$\hat{\mathbf{n}}(k, rs) = \mathbf{y}(k, rs) - \hat{\mathbf{H}}(k, rs)\mathbf{X}(k, rs)$$

Referring to the Equation 6, $\mathbf{y}(k,rs)$ is a reception signal corresponding to the *k*-th subcarrier and the -th DMRS symbol. $\hat{\mathbf{H}}(k,rs)$ is a channel estimated from the *k*-th subcarrier and the ⁀-th DMRS symbol. $\mathbf{X}(k,rs)$ is a transmission signal according to a DMRS pattern. $\hat{\mathbf{n}}(k,rs)$ is a noise vector estimated at an RE located in the *k*-th subcarrier from the

⁀-the DMRS symbol.

Noise covariance in an RBG$^{init}$(*i*) area may be obtained (or calculated) as in the following Equation based on the noise vector (or noise and an interference vector) obtained (or measured).

【Equation 7】

$$\mathbf{R}_{nn}^{RBG^{init}}(i) \ (\ i = 0, .., N_{RBG} - 1)$$

$$= \frac{1}{N_{samp}} \sum_{k \in RBG(i)} \mathbf{R}_{nn}^{sc}(k)$$

$$= \frac{1}{N_{samp}} \sum_{k \in RBG(i)} \sum_{rs} \mathbf{R}_{nn}^{RE}(k, rs)$$

$$= \frac{1}{N_{samp}} \sum_{k \in RBG(i)} \sum_{rs} \hat{\mathbf{n}}(k, rs)\hat{\mathbf{n}}^{H}(k, rs)$$

Referring to the Equation 7, a N$_{samp}$ is the number of samples in the RBG. For example, the number of samples in one RB may be a product of the number of subcarriers in the RB and the number of DMRS symbols. Therefore, the number of samples in the RBG may be a product of the number of RBs included in the RBG and the number of samples in one RB. $\mathbf{R}_{nn}^{RBG^{init}}(i)$ is noise covariance in the RBG$^{init}$(*i*) area.

FIG. 8 illustrates an algorithm for setting a new RBG. Steps of FIG. 8 may be related to the operation 620 of FIG. 6.

Referring to FIG. 8, based on $\mathbf{R}_{nn}^{\mathrm{RBG}^{\mathrm{init}}}(i)$ and an interference pattern obtained in FIG. 7, a new RBG may be configured and noise covariance in the new RBG may be obtained. The new RBG may be represented as RBG$^{\mathrm{init}}$(i). The noise covariance in the new RBG may be represented as $\mathbf{R}_{nn}^{\mathrm{RBG}^{\mathrm{new}}}(i)$. For example, $\beta^{RBG}(i)$, which is a determination criterion for obtaining a new RBG$^{\mathrm{init}}$(i) area, may be set. $\beta^{RBG}(i)$ may be set as in the following Equation.

【Equation 8】

$$\beta^{RBG}(i) = F\left(\mathbf{R}_{nn}^{\mathrm{RBG}^{\mathrm{init}}}(i+1), \mathbf{R}_{nn}^{\mathrm{RBG}^{\mathrm{init}}}(i)\right)$$

Referring to the Equation 8, F(A, B) is a function that outputs a scalar value based on elements of a matrix A and a matrix B. Therefore, $\beta^{RBG}(i)$ may be a scalar value outputted based on elements of a matrix $\mathbf{R}_{nn}^{\mathrm{RBG}^{\mathrm{init}}}(i+1)$ and a matrix $\mathbf{R}_{nn}^{\mathrm{RBG}^{\mathrm{init}}}(i)$. For example, according to F(a,b), $\beta^{RBG}(i)$ may be configured as in the following Equations.

【Equation 9】

$$\beta^{RBG}(i) = \frac{\left\|\mathbf{R}_{nn}^{\mathrm{RBG}^{\mathrm{init}}}(i+1)\right\|_F^2}{\left\|\mathbf{R}_{nn}^{\mathrm{RBG}^{\mathrm{init}}}(i)\right\|_F^2}$$

【Equation 10】

$$\beta^{RBG}(i) = \frac{\mathrm{tr}\left(\mathbf{R}_{nn}^{\mathrm{RBG}^{\mathrm{init}}}(i+1)\right)}{\mathrm{tr}\left(\mathbf{R}_{nn}^{\mathrm{RBG}^{\mathrm{init}}}(i)\right)}$$

Referring to the Equation 10, tr(A) is a trace function of the matrix A.

According to the Equation 9 and the Equation 10 described above, a change in an interference characteristic between RBGs may be identified (or detected) based on an entire noise covariance matrix or a diagonal element of the noise covariance matrix.

$\beta^{RBG}(i)$ may be identified (or calculated) for each RBG. An electronic device may identify an RBG$^{\mathrm{new}}$(i) area, which is a set of RBs having little change according to an index of $\beta^{RBG}(i)$. RBG$^{\mathrm{new}}$(i) may be identified that $\beta^{RBG}(i)$ obtained according to neighboring RBG$^{\mathrm{init}}$(i) and RBG$^{\mathrm{init}}$(i + 1) combines all neighboring RBG$^{\mathrm{init}}$(i) that satisfy the following Equation.

【Equation 11】

$$1/\mathrm{Th1} < \beta^{RBG}(i) < \mathrm{Th1}$$

Referring to the Equation 11, Th1 is a system optimization parameter. The Th1 may be preset or may be changed according to a situation.

The electronic device may identify (or calculate) $\mathbf{R}_{nn}^{\mathrm{RBG}^{\mathrm{new}}}(i)$ by combining all neighboring RBG$^{\mathrm{init}}$(i) that satisfy the following Equation by the $\beta^{RBG}(i)$.

According to the above-described embodiment, the electronic device may identify the $\mathbf{R}_{nn}^{\mathrm{RBG}^{\mathrm{new}}}(i)$ based on an algorithm according to a step 810 to a step 870 illustrated in FIG. 8. In the algorithm according to the step 810 to the step 870, $N_{RBG}^{init}$ may be the number of initially set RBGs, and $N_{RBG}^{new}$ may be the number of newly set RBGs.

FIG. 9 illustrates a flowchart of an operation of an electronic device for performing a covariance shrinkage scheme. An operation 910 to an operation 980 may be performed in an electronic device (or a receiver) (e.g., a processor of the electronic device). The operation 910 to the operation 980 may be related to the operation 630 of FIG. 6.

Referring to FIG. 9, in the operation 910, the electronic device may identify the number of samples in an RBG. For example, since the number of samples in $\mathbf{R}_{nn}^{RBG^{new}}(i)$ is not infinite, estimated noise covariance may occur an estimation error compared to ideal noise covariance. Therefore, the covariance shrinkage scheme may be applied to decrease the estimation error generated by the insufficient number of samples compared to a size of a dimension of a matrix.

In an operation 920, the electronic device may identify whether it is necessary to perform the covariance shrinkage scheme. For example, the electronic device may apply the covariance shrinkage scheme only to RBG(l) that the number of samples satisfies the following Equation 12. A case that the Equation 12 is not satisfied may mean that the number of samples is sufficient. The covariance shrinkage scheme may not be performed in an RGB that does not satisfy the Equation 12, and the number of samples is sufficient. Accordingly, unnecessary computational complexity may be minimized.

【Equation 12】

$$N_{samp} < G(N_{rx}), l = 0, \dots, N_{RBG}^{new} - 1$$

Referring to the Equation 12, $G(N_{rx})$ may be changed according to a system. For example, $G(N_{rx})$ may be set as Equation 13.

【Equation 13】

$$G(N_{rx}) = \mathrm{k} \times N_{rx}$$

Referring to the Equation 13, k may be changed according to a system.
Hereinafter, operations 941, 942, 951, and 952, which are operations in which the covariance shrinkage scheme is applied to the noise covariance matrix, may be described. Referring to the operation 941, the operation 942, the operation 951, and the operation 952, a covariance shrinkage (or linear shrinkage) scheme may be applied to $\mathbf{R}_{nn}^{RBG^{new}}(i)$ according to the following Equation 14.

【Equation 14】

$$\mathbf{D}_{nn}^{RBG^{new}}(i) \ ( i = 0, \dots, N_{RBG}^{new} - 1)$$

$$= (1 - \hat{\rho})\mathbf{R}_{nn}^{RBG^{new}}(i) + \hat{\rho}\mathbf{F}(i), \qquad 0 \leq \hat{\rho} \leq 1$$

Referring to the Equation 14, $\mathbf{D}_{nn}^{RBG^{new}}(i)$ is a matrix in which $\mathbf{R}_{nn}^{RBG^{new}}(i)$ is corrected according to the covariance shrinkage scheme. is a covariance shrinkage coefficient. $\hat{\rho}$ may be determined with low complexity. For example, $\hat{\rho}$ may be determined based on a Rao-Blackwell Ledoit-Wolf (RBLW) scheme or an oracle approximate linkage (OAS) scheme. $\mathbf{F}(i)$ is a target matrix of a size ($N_{rx} \times N_{rx}$).

For example, unlike a form in which an identity matrix is added to noise covariance, the target matrix $\mathbf{F}(i)$ may be determined according to a degree of a power difference of an antenna, considering a case in which power differs for each actual antenna. The target matrix may be configured as in the following Equation 15.

【Equation 15】

$$\mathbf{F}(i) = \begin{cases} \dfrac{\mathrm{tr}\left(\mathbf{R}_{nn}^{RBG^{new}}(i)\right)}{N_{rx}}\mathbf{I}, & \text{if } \dfrac{\max\limits_{j}\left(\mathbf{R}_{nn}^{RBG^{new}(i)}[j,j]\right)}{\min\limits_{j}\left(\mathbf{R}_{nn}^{RBG^{new}(i)}[j,j]\right)} \leq \mathrm{Th3} \\ \mathrm{Diag}\left(\mathbf{R}_{nn}^{RBG^{new}}(i)\right), & \text{otherwise.} \end{cases}$$

Referring to the Equation 15, $\mathbf{R}_{nn}^{\mathrm{RBG^{new}}(i)}[j,j]$ is a $i$-th diagonal element of noise and interference variance of RBG$^{\mathrm{new}}(i)$. A diagonal element of a matrix of $\mathrm{Diag}\left(\mathbf{R}_{nn}^{\mathrm{RBG^{new}}}(i)\right)$ may be configured to be the same as a diagonal entry of $\mathbf{R}_{nn}^{\mathrm{RBG^{new}}}(i)$. An off-diagonal element of the matrix of $\mathrm{Diag}\left(\mathbf{R}_{nn}^{\mathrm{RBG^{new}}}(i)\right)$ may all be configured as 0. I is an identity matrix of a size ($N_{rx} \times N_{rx}$). Th3 is a threshold value for a power difference between antennas. Based on the above-described operation, the target matrix $\mathbf{F}(i)$ may be determined, and covariance shrinkage may be performed. (an operation 951 and an operation 952)

For example, since the off-diagonal element of $\mathbf{F}(i)$ is 0, when a value of is 1 ($\hat{\rho} = 1$), $\mathbf{D}_{nn}^{\mathrm{RBG^{new}}}(i)$ may be set to $\mathbf{F}(i)$. Therefore, the off-diagonal element of $\mathbf{D}_{nn}^{\mathrm{RBG^{new}}}(i)$ may be 0. Since an inverse function of a diagonal matrix is the diagonal matrix, complexity may be decreased as in the following Equation 16, in case that a pre-whitening computation is performed. (an operation 980)

【Equation 16】

$$\tilde{\mathbf{H}}(k) = \mathbf{F}^{-1}\hat{\mathbf{H}}(k) = \begin{cases} \dfrac{N_{rx}}{\mathrm{tr}\left(\mathbf{R}_{nn}^{\mathrm{RBG^{new}}}(i)\right)}\hat{\mathbf{H}}(k), & \text{if } \dfrac{\max_j\left(\mathbf{R}_{nn}^{\mathrm{RBG^{new}}(i)}[j,j]\right)}{\min_j\left(\mathbf{R}_{nn}^{\mathrm{RBG^{new}}(i)}[j,j]\right)} \leq \mathrm{Th3} \\ \mathrm{Diag}^{-1}\left(\mathbf{R}_{nn}^{\mathrm{RBG^{new}}}(i)\right)\hat{\mathbf{H}}(k), & \text{otherwise.} \end{cases}$$

According to an embodiment, in case that antennas are physically spaced apart, such as cooperative multiple point (CoMP) reception, or antennas inputted to a modem are divided by other beamforming or antenna polarization, there may be less correlation between sets of antennas. In this case, the off-diagonal element of $\mathbf{R}_{nn}^{\mathrm{RBG^{new}}}(i)$ may be approximated to 0.

For example, in case that noise covariance for all antennas satisfies the following Equation 17, the noise covariance matrix may be approximated in a form of a block diagonal matrix having $N_{set}$ subblocks as in Equation 20.

【Equation 17】

$$\|\mathbf{R}_{nn}(i,j)\|_2^2 < \mathrm{Th4}, \quad i \in \mathrm{AntSet}_p, j \in \mathrm{AntSet}_q, \quad p \neq q$$

Referring to the Equation 17, AntSet$_i$ is configured as Equation 18. $N_{rx}$ is configured as in Equation 19.

【Equation 18】

$$\mathrm{AntSet}_i = \left\{ j^{th}\ \mathrm{antenna}, \ j \in \left( \sum_{j=0}^{i-1} N_{rx}^{set_j}, \sum_{j=0}^{i-1} N_{rx}^{set_j} + 1 \dots, \sum_{j=0}^{i} N_{rx}^{set_j} - 1 \right) \right\}, i = 0, \dots, N_{set} - 1$$

【Equation 19】

$$N_{rx} = \sum_{j=0}^{N_{set}-1} N_{rx}^{set_j}$$

【Equation 20】

$$\mathbf{R}_{nn}^{\mathrm{RBG^{new}}}(i) = \begin{bmatrix} \mathbf{R}_{nn}^{\mathrm{sub},0} & 0 & \cdots & 0 \\ 0 & \mathbf{R}_{nn}^{\mathrm{sub},1} & \cdots & 0 \\ \vdots & \vdots & \ddots & \vdots \\ 0 & 0 & \cdots & \mathbf{R}_{nn}^{\mathrm{sub},N_{set}-1} \end{bmatrix}$$

Referring to the Equation 20, $\mathbf{R}_{nn}^{\text{sub},i}$ is received noise covariance of a size ( $N_{rx}^{set_j} \times N_{rx}^{set_j}$ ) corresponding to AntSet$_j$. Since a characteristic of $\mathbf{R}_{nn}^{\text{sub},i}$ and $\mathbf{R}_{nn}^{\text{sub},j}$, which are $i \neq j$, is different, in case that $\mathbf{R}_{nn}^{\text{RBG}^{\text{new}}}(i)$ is approximated in a form of a block diagonal matrix, the covariance shrinkage scheme may be applied to each $\mathbf{R}_{nn}^{\text{sub},i}$ as illustrated in Equation 21. As the covariance shrinkage scheme is applied to each $\mathbf{R}_{nn}^{\text{sub},j}$, interference performance of the electronic device may increase, and computational complexity may decrease. (an operation 941 and an operation 942)

【Equation 21】

$$\mathbf{D}_{nn}^{\text{RBG}^{\text{new}}}(i) = \begin{bmatrix} \mathbf{D}_{nn}^{\text{sub},1}(i) & 0 & \cdots & 0 \\ 0 & \mathbf{D}_{nn}^{\text{sub},2}(i) & \cdots & 0 \\ \vdots & \vdots & \ddots & \vdots \\ 0 & 0 & \cdots & \mathbf{D}_{nn}^{\text{sub},N_{set}-1}(i) \end{bmatrix}$$

Referring to the Equation 21, $\mathbf{D}_{nn}^{\text{sub},j}(i)$ may be set as Equation 22.

【Equation 22】

$$\mathbf{D}_{nn}^{\text{sub},j}(i) = (1 - \hat{\rho})\mathbf{R}_{nn}^{\text{sub},j}(i) + \hat{\rho}\mathbf{F}(i)^{(j)}, j = 0, \ldots, N_{set} - 1$$

Referring to the Equation 22, $\mathbf{F}(i)$ is a $N_{rx}^{set_j} \times N_{rx}^{set_j}$ matrix.

According to the above-described operations, a pre-whitening computation may be performed through an inverse function of a noise covariance matrix to which the covariance shrinkage scheme is applied. In other words, in case that a covariance shrinkage coefficient $\hat{\rho}$ is not 1, the pre-whitening computation may be performed through the inverse function of the noise covariance matrix that is not corrected (or configured) as a diagonal matrix according to the covariance shrinkage scheme. (an operation 970) In case that the covariance shrinkage coefficient $\hat{\rho}$ is 1, the pre-whitening computation may be performed through the inverse function of the noise covariance matrix corrected (or configured) as the diagonal matrix according to the covariance shrinkage scheme. (an operation 980)

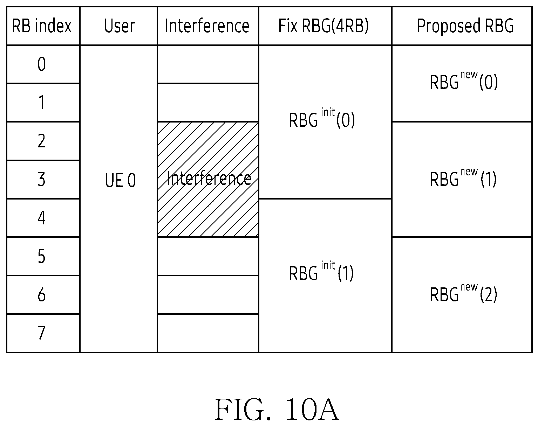

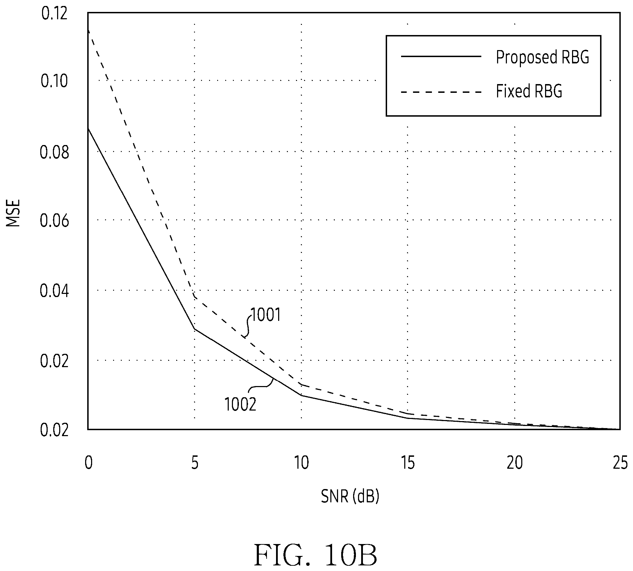

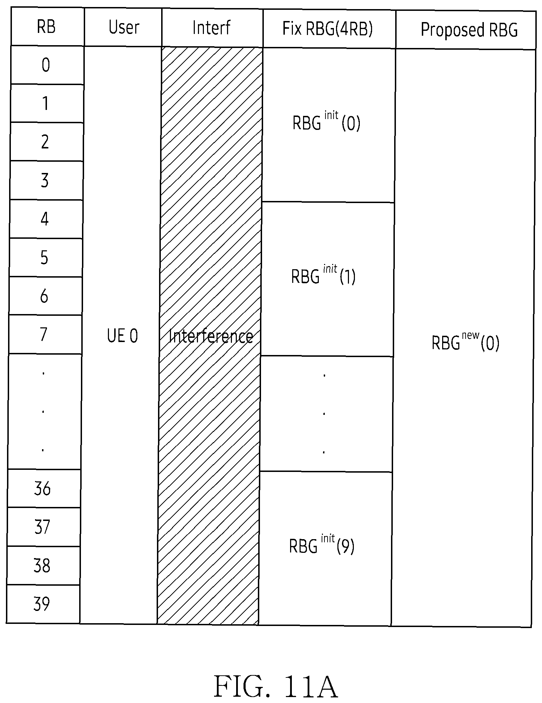

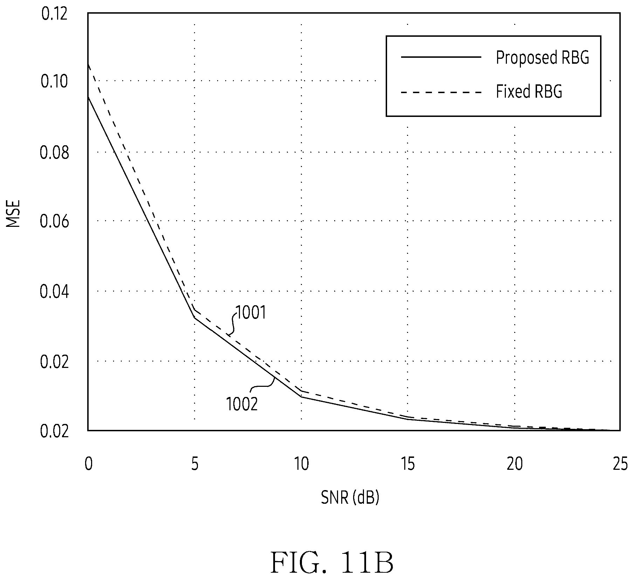

According to an embodiment, the electronic device may determine (or derive) an appropriate sample area to identify high-accuracy noise covariance for various interference patterns, and apply the covariance shrinkage scheme to the noise covariance in case that the number of samples in the determined (or derived) sample area is insufficient. The electronic device may decrease an estimation error of the noise covariance by applying the covariance shrinkage scheme to the noise covariance. As a result, as an error in noise and interference variance are decreased, MMSE reception performance in an interference environment may be improved. Hereinafter, according to the above-described embodiment, an example of a specific operation of the electronic device may be described. An operation of the electronic device and an effect according to the operation of the electronic device in a sub-band interference environment may be described through FIGS. 10A and 10B. An operation of the electronic device and an effect according to the operation of the electronic device in a full-band interference environment may be described through FIGS. 11A and 11B.

FIG. 10A illustrates an example in which a new RBG is configured in a sub-band interference environment.

FIG. 10B illustrates an example of graphs indicating MSE performance for an initial RBG and a new RBG in a sub-band interference environment.

Referring to FIG. 10A, FIG. 10A illustrates an RBG area in an environment in which interference exists as a sub-band. For example, RBs of RB indices 0 to 7 may be allocated to UE 0, which is a user. Interference may exist in RBs of RB indices 2 to 4 among the allocated RBs.

A Fix RBG may mean an initial RBG (e.g., RBG$^{\text{init}}$) with a fixed RB size set to 4 RBs. A proposed RBG may mean a newly set RBG (e.g., RBG$^{\text{new}}$) based on noise covariance identified in the Fix RBG. The proposed RBG may be configured based on the operation 620 of FIG. 6. The proposed RBG may be configured with three RBGs (e.g., RBG$^{\text{new}}$(0) to RBG$^{\text{new}}$(2)). An electronic device may receive a signal on a plurality of RBs divided according to the proposed RBG. A noise covariance matrix may be obtained based on the proposed RBG. A covariance shrinkage scheme may be applied to the obtained noise covariance matrix.

Referring to FIG. 10B, a graph 1001 indicates an MMSE of a transmission signal and an MMSE reception signal according to an SNR in the Fix RBG. A graph 1002 indicates MMSE of a transmission signal and an MMSE reception signal according to the SNR in the proposed RBG. Therefore, in case that the above-described embodiment is applied, there is a performance gain effect of 1 to 2 dB.

FIG. 11A illustrates an example in which a new RBG is configured in a full-band interference environment.

FIG. 11B illustrates an example of graphs indicating MSE performance for an initial RBG and a new RBG in a full-band interference environment.

Referring to FIG. 11A, FIG. 11A illustrates an RBG area in an environment in which interference exists as a full-band. For example, RBs of RB indices 0 to 39 may be allocated to UE 0, which is a user. The interference may exist across all allocated RBs. For example, a statistical characteristic of the interference of all the allocated RBs may be the same.

A Fix RBG may mean an initial RBG (e.g., $RBG^{init}$) with the fixed RB size set to 4 RBs. A proposed RBG may mean a newly set RBG (e.g., $RBG^{new}$) based on noise covariance identified in the Fix RBG. The proposed RBG may be configured based on the operation 620 of FIG. 6. The proposed RBG may be configured with one RBG (e.g., $RBG^{new}(0)$). The electronic device may receive a signal on a plurality of RBs divided according to the proposed RBG. A noise covariance matrix may be obtained based on the proposed RBG. A covariance shrinkage scheme may be applied to the obtained noise covariance matrix.

Referring to FIG. 11B, a graph 1001 indicates an MMSE of a transmission signal and an MMSE reception signal according to an SNR in the Fix RBG. A graph 1102 indicates an MMSE of a transmission signal and an MMSE reception signal according to the SNR in the proposed RBG. Therefore, in case that the above-described embodiment is applied, there is a performance gain effect of 0.3 to 0.5 dB.

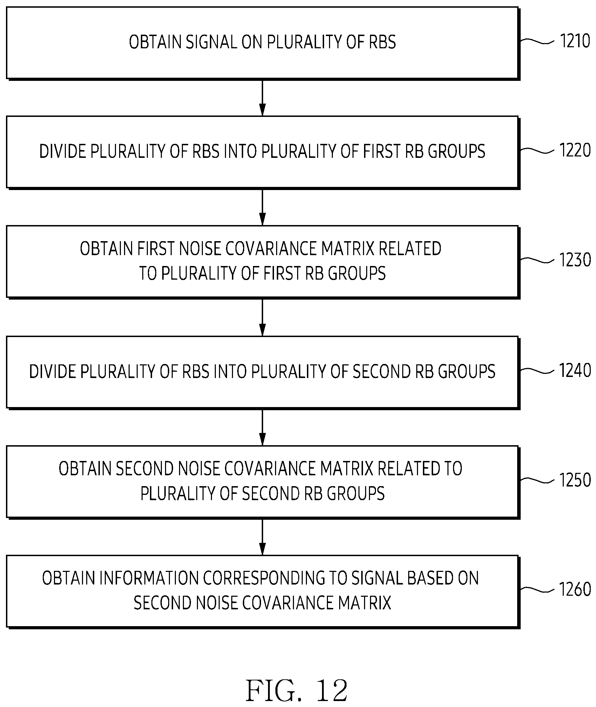

FIG. 12 illustrates a flowchart of an operation of an electronic device.

Referring to FIG. 12, in an operation 1210, an electronic device (e.g., a processor of the electronic device) may obtain a signal on a plurality of RBs. For example, the electronic device may obtain a signal from a terminal on the plurality of RBs allocated to the terminal. For example, interference may exist in at least a portion of the plurality of RBs. For example, the signal may be transmitted through a PUSCH.

In an operation 1220, the electronic device may divide the plurality of RBs into a plurality of first RB groups (e.g., $RBG^{init}$). For example, the plurality of RBs may be divided into the plurality of first RB groups based on the designated number. As an example, a size of each of the plurality of first groups may be set to be the same. The size of each of the plurality of first groups may be a fixed size.

In an operation 1230, the electronic device may obtain a first noise covariance matrix related to the plurality of first RB groups. For example, the electronic device may obtain the first noise covariance matrix based on noise vectors obtained from each of the plurality of first RB groups. As an example, the electronic device may estimate noise and interference based on a reception signal, an estimated channel, and a reference signal according to samples set in the plurality of first RB groups. The number of samples in one first RB group may be set as a product of the number of subcarriers in an RB and the number of DMRS symbols.

For example, the first noise covariance matrix may mean a covariance matrix of a noise component and an interference component related to the plurality of first RB groups. For example, the first noise covariance matrix may be represented as Equation 7 described above.

In an operation 1240, the electronic device may divide a plurality of RBs into a plurality of second RB groups. For example, the electronic device may regroup the plurality of RBs divided into the plurality of first RB groups. The electronic device may divide the plurality of RBs into the plurality of second RB groups based on a grouping result.

For example, the electronic device may obtain a reference value for changing the plurality of first RB groups based on the first noise covariance matrix. As an example, the reference value may be $\beta^{RBG}(i)$ according to Equation 8 described above. The electronic device may divide the plurality of RBs divided into the plurality of first RB groups into the plurality of second RB groups based on identifying that the reference value is in a designated range. As an example, the electronic device may divide the plurality of RBs divided into the plurality of first RB groups into the plurality of second RB groups based on $\beta^{RBG}(i)$, which is the reference value, satisfying Equation 11.

In an operation 1250, the electronic device may obtain a second noise covariance matrix related to the plurality of second RB groups. For example, the second noise covariance matrix may mean a covariance matrix of a noise component and an interference component related to the plurality of second RB groups.

In an operation 1260, the electronic device may obtain information corresponding to a signal based on the second noise covariance matrix. For example, the electronic device may change (or correct) the second noise covariance matrix to a third noise covariance matrix based on a covariance shrinkage scheme. The electronic device may perform a pre-whitening computation through an inverse function of the noise third noise covariance matrix. The electronic device may obtain information corresponding to a signal based on the pre-whitening computation.

For example, the electronic device may identify that the number of samples included in each of the plurality of second RB groups is less than the threshold number. The samples may be used to obtain the second noise covariance matrix. The electronic device may perform the covariance shrinkage scheme based on identifying that the number of samples is less than the threshold number.

For example, the electronic device may perform the covariance shrinkage scheme according to Equation 14. The electronic device may obtain a target matrix based on the second noise covariance matrix to perform the covariance shrinkage scheme. The electronic device may obtain the third noise covariance matrix based on a sum of the second noise covariance matrix to which a first weight is applied and the target matrix to which a second weight is applied. As an example, a sum of the first weight and the second weight may be set to 1. The second weight may be referred to as a covariance shrinkage coefficient .

For example, the third noise covariance matrix may be configured as a diagonal matrix based on the second weight being set to 1. The electronic device may perform the pre-whitening computation through the inverse function of the third noise covariance matrix corrected as the diagonal matrix. In this case, since the third noise covariance matrix is corrected as the diagonal matrix, computation complexity may be decreased.

For example, a target matrix used in the covariance shrinkage scheme may be configured as a diagonal matrix. According to an embodiment, in case that the second noise covariance matrix satisfies a designated condition, the target matrix may be configured as a real number multiple of a unit matrix. For example, the target matrix may be configured as a matrix obtained by multiplying an identity matrix by a value obtained by dividing a trace of second covariance by the number of antennas.

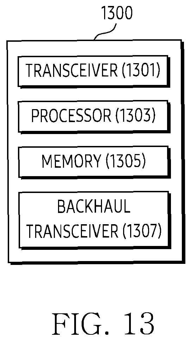

FIG. 13 illustrates an example of a functional configuration of an electronic device.

Referring to FIG. 13, according to the above-described embodiments, an electronic device 1300 may be included in a base station (e.g., the base station 110 of FIG. 2) or a DU (e.g., the DU 210 of FIG. 2).

According to an embodiment, the electronic device 1300 may include a transceiver 1301, a processor 1303, memory 1305, and a backhaul transceiver 1307.

The transceiver 1301 may perform functions for transmitting and receiving a signal in a wired communication environment. The transceiver 1301 may include a wired interface for controlling a direct connection between a device and a device through a transmission medium (e.g., a copper wire, an optical fiber). For example, the transceiver 1301 may transfer an electrical signal to another device through a copper wire or perform a conversion between an electrical signal and an optical signal.

The transceiver 1301 may perform functions for transmitting and receiving a signal in a wireless communication environment. For example, the transceiver 1301 may perform a conversion function between a baseband signal and a bit stream according to a physical layer standard of a system. For example, when transmitting data, the transceiver 1301 generates complex-valued symbols by encoding and modulating a transmission bit stream. Additionally, when receiving data, the transceiver 1301 restores a received bit stream by demodulating and decoding the baseband signal. Additionally, the transceiver 1301 may include a plurality of transmission/reception paths.

The transceiver 1301 transmits and receives the signal as described above. Accordingly, all or a portion of the transceiver 1301 may be referred to as a communication unit, a transfer unit, a reception unit, or a transmission/reception unit. Additionally, in the following description, transmission and reception performed through a wireless channel are used to mean including processing performed by the transceiver 1301 as described above.

The processor 1303 controls overall operations of the electronic device 1300. The processor 1303 may be referred to as a control unit. For example, the processor 1303 transmits and receives a signal through the transceiver 1301 (or through the backhaul transceiver 1307). Additionally, the processor 1303 writes data to and reads data from the memory 1305. In addition, the processor 1303 may perform functions of a protocol stack required by a communication standard. According to an embodiment, the processor 1303 may obtain a transmission signal at a terminal 120 based on a channel estimated using reception reference signals and a whitening matrix applied to reception data. For example, the processor 1303 may perform computations of the functional blocks of FIG. 6 or 7. Although only the processor 1303 is illustrated in FIG. 13, according to another implementation example, the electronic device 1300 may include two or more processors.

In the present disclosure, operations of the processor 1303 may be executed by software or mean controlling hardware components such as a Field Programmable Gate Array (FPGA) or an application-specific integrated circuit (ASIC). Additionally, the processor 1303 may include at least one of components such as software components, object-oriented software components, class components, and task components, processes, functions, attributes, procedures, subroutines, segments of a program code, drivers, firmware, microcode, circuitry, data, a database, data structures, tables, arrays, and variables. The processor 1303 may include at least one module, and a term "module" includes a unit configured with hardware, software, or firmware. For example, a module may be used interchangeably with terms such as logic, a logical block, a component, or circuitry. The module may be an integrated component , a minimum unit performing one or more functions, or a part thereof. For example, the module may be configured with an ASIC.

For example, the processor 1103 may include the functional blocks according to the above-described embodiment. As an example, the processor 1103 may include at least one of a noise and interference estimation unit, a first noise covariance calculation unit, a second noise covariance calculation unit, a determination unit whether covariance shrinkage is applied, a block diagonal matrix determination unit, a target matrix setting unit, and/or a shrinkage application unit. The first noise covariance calculation unit may be used to calculate noise covariance for a fixed RBG initially set. The second noise covariance calculation unit may be used to calculate noise covariance for a newly set RBG.

The memory 1305 stores data such as a basic program, an application program, and setting information, and the like for operation of the electronic device 1300. The memory 1305 may be referred to as a storage unit. The memory 1305 may be configured with volatile memory, nonvolatile memory, or a combination of the volatile memory and the nonvolatile memory. In addition, the memory 1305 provides stored data according to a request of the processor 1303.

The electronic device 1300 may further include the backhaul transceiver 1307 for connection with a core network or another base station. The backhaul transceiver 1307 provides an interface for performing communication with other nodes in a network. That is, the backhaul transceiver 1307 converts a bit stream transmitted from a base station to another node, for example, another access node, another base station, an upper node, a core network and the like, into a physical signal, and converts a physical signal received from another node into a bit stream.

According to an embodiment, a method performed by an electronic device (e.g., an electronic device 1300 or an MMSE receiver), may comprise obtaining a signal on a plurality of resource blocks (RBs). The method may comprise dividing the plurality of RBs into a plurality of first RB groups. The method may comprise obtaining a first noise covariance matrix related to the plurality of first RB groups. The method may comprise dividing, based on the first noise covariance matrix, the plurality of RBs into a plurality of second RB groups. The method may comprise obtaining a second noise covariance matrix related to the plurality of second RB groups. The method may comprise obtaining, based on the second noise covariance matrix, information corresponding to the signal.

According to an embodiment, the method may comprise changing, based on a covariance shrinkage scheme, the second noise covariance matrix to a third noise covariance matrix.

According to an embodiment, the method may comprise obtaining, based on the second noise covariance matrix, a target matrix. The method may comprise obtaining, based on a sum of the second noise covariance matrix applied a first weight and the target matrix applied a second weight, the third noise covariance matrix. A sum of the first weight and the second weight may be set to '1'.

According to an embodiment, the target matrix may be configured as a diagonal matrix.

According to an embodiment, the third noise covariance matrix may be configured, based on the second weight set to '1', as a diagonal matrix.

According to an embodiment, the method may comprise identifying that the number of samples, included in each of the plurality of second RB groups and used for obtaining the second noise covariance matrix, is less than a threshold number. The method may comprise, based on identifying that the number of the samples is less than the threshold number, performing the covariance shrinkage scheme.

According to an embodiment, the signal may be transmitted through a physical uplink shared channel (PUSCH).

According to an embodiment, the method may comprise obtaining, based on noise vectors obtained from each of the plurality of first RB groups, the first noise covariance matrix.

According to an embodiment, the method may comprise obtaining, based on the first noise covariance matrix, a reference value for changing the plurality of first RB groups. The method may comprise dividing, based on identifying that the reference value is in a designated range, the plurality of RBs divided into the plurality of first RB groups, into the plurality of second RB groups.

According to an embodiment, the plurality of RBs may be divided into the plurality of first RB groups based on a designated number.

According to an embodiment, an electronic device may comprise at least one processor, and a transceiver. The at least one processor may be configured to obtain a signal on a plurality of resource blocks (RBs). The at least one processor may be configured to divide the plurality of RBs into a plurality of first RB groups. The at least one processor may be configured to obtain a first noise covariance matrix related to the plurality of first RB groups. The at least one processor may be configured to divide, based on the first noise covariance matrix, the plurality of RBs divided into the plurality of first RB groups, into a plurality of second RB groups. The at least one processor may be configured to obtain a second noise covariance matrix related to the plurality of second RB groups. The at least one processor may be configured to obtain, based on the second noise covariance matrix, information corresponding to the signal.

According to an embodiment, the at least one processor may be configured to change, based on a covariance shrinkage scheme, the second noise covariance matrix to a third noise covariance matrix.

According to an embodiment, the at least one processor may be configured to obtain, based on the second noise covariance matrix, a target matrix. The at least one processor may be configured to obtain, based on a sum of the second noise covariance matrix applied a first weight and the target matrix applied a second weight, the third noise covariance matrix. A sum of the first weight and the second weight may be set to '1'.

According to an embodiment, the target matrix may be configured as a diagonal matrix.

According to an embodiment, the third noise covariance matrix may be configured, based on the second weight set to '1', as a diagonal matrix.

According to an embodiment, the at least one processor may be configured to identify that the number of samples, included in each of the plurality of second RB groups and used for obtaining the second noise covariance matrix, is less than a threshold number. The at least one processor may be configured to, based on identifying that the number of the samples is less than the threshold number, perform the covariance shrinkage scheme.

According to an embodiment, the signal may be transmitted through a physical uplink shared channel (PUSCH).

According to an embodiment, the at least one processor may be configured to obtain, based on noise vectors obtained from each of the plurality of first RB groups, the first noise covariance matrix.

According to an embodiment, the at least one processor may be configured to obtain, based on the first noise covariance matrix, a reference value for changing the plurality of first RB groups. The at least one processor may be configured to divide, based on identifying that the reference value is in a designated range, the plurality of RBs divided into the plurality of first RB groups, into the plurality of second RB groups.

According to an embodiment, the plurality of RBs may be divided into the plurality of first RB groups based on a designated number.

According to an embodiment, a non-transitory computer readable storage medium may include memory storing a program including instructions. The instructions, when executed by a processor, may cause an electronic device to perform one of the methods performed by the electronic device described above.

According to the above-described embodiment, an electronic device (e.g., the electronic device 1300) may configure an initial RBG configured with RBs of a fixed size. The electronic device may obtain a noise covariance matrix related to initial RBGs. The electronic device may perform grouping again based on noise covariance related to the initial RBGs. The electronic device may configure a new RBG according to grouping. The electronic device may obtain a noise covariance matrix related to new RBGs. The electronic device may apply a covariance shrinkage scheme to the noise covariance matrix. The electronic device may correct (or change) the noise covariance matrix to be close to a diagonal matrix according to the covariance shrinkage scheme. An inverse function of the noise covariance matrix is used in a pre-whitening computation, and obtaining the inverse function of the noise covariance matrix may have high complexity. As the noise covariance matrix becomes closer to the diagonal matrix, it is easy to obtain the inverse function of the noise covariance matrix. Therefore, the electronic device may decrease complexity by correcting the noise covariance matrix close to the diagonal matrix.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A method performed by an electronic device, comprising:

   obtaining a signal on a plurality of resource blocks (RBs);
   dividing the plurality of RBs into a plurality of first RB groups;
   obtaining a first noise covariance matrix related to the plurality of first RB groups;
   dividing, based on the first noise covariance matrix, the plurality of RBs into a plurality of second RB groups;
   obtaining a second noise covariance matrix related to the plurality of second RB groups; and
   obtaining, based on the second noise covariance matrix, information corresponding to the signal.

2. The method of claim 1, wherein the method further comprises changing, based on a covariance shrinkage scheme, the second noise covariance matrix to a third noise covariance matrix.

3. The method of claim 2, wherein the method comprises:

   obtaining, based on the second noise covariance matrix, a target matrix; and
   obtaining, based on a sum of the second noise covariance matrix applied a first weight and the target matrix applied a second weight, the third noise covariance matrix,
   wherein a sum of the first weight and the second weight is set to '1'.

4. The method of claim 3, wherein the target matrix is configured as a diagonal matrix.

5. The method of any one of claims 3 to 4, wherein the third noise covariance matrix is configured, based on the second weight set to '1', as a diagonal matrix.

6. The method of any one of claims 2 to 5, wherein the method further comprises:

   identifying that the number of samples, included in each of the plurality of second RB groups and used for obtaining the second noise covariance matrix, is less than a threshold number; and
   based on identifying that the number of the samples is less than the threshold number, performing the covariance shrinkage scheme.

7. The method of any one of claims 1 to 6, wherein the signal is transmitted through a physical uplink shared channel (PUSCH).

8. The method of any one of claims 1 to 7, wherein the method further comprises obtaining, based on noise vectors obtained from each of the plurality of first RB groups, the first noise covariance matrix.

9. The method of any one of claims 1 to 8, wherein the method further comprises:

   obtaining, based on the first noise covariance matrix, a reference value for changing the plurality of first RB groups; and
   dividing, based on identifying that the reference value is in a designated range, the plurality of RBs divided into the plurality of first RB groups, into the plurality of second RB groups.

10. The method of any one of claims 1 to 9, wherein the plurality of RBs are divided into the plurality of first RB groups based on a designated number.

11. An electronic device comprising:

at least one processor; and
a transceiver,
wherein the at least one processor is configured to:

obtain a signal on a plurality of resource blocks (RBs);
divide the plurality of RBs into a plurality of first RB groups;
obtain a first noise covariance matrix related to the plurality of first RB groups;
divide, based on the first noise covariance matrix, the plurality of RBs divided into the plurality of first RB groups, into a plurality of second RB groups;
obtain a second noise covariance matrix related to the plurality of second RB groups; and
obtain, based on the second noise covariance matrix, information corresponding to the signal.

12. The electronic device of claim 11, wherein the at least one processor is further configured to:
change, based on a covariance shrinkage scheme, the second noise covariance matrix to a third noise covariance matrix.

13. The electronic device of claim 12, wherein the at least one processor is further configured to:

obtain, based on the second noise covariance matrix, a target matrix; and
obtain, based on a sum of the second noise covariance matrix applied a first weight and the target matrix applied a second weight, the third noise covariance matrix,
wherein a sum of the first weight and the second weight is set to '1'.

14. The electronic device of claim 13, wherein the target matrix is configured as a diagonal matrix.

15. A non-transitory computer readable storage medium including memory storing a program including instructions, wherein the instructions, when executed by a processor, cause an electronic device to perform one of methods of claims 1 to 10.

110

120

FIG. 1

110

210

215

220

DU

RU

FIG. 2

RADIO FRAME (314)

SLOT (306)

RESOURCE ELEMENT (312)

RESOURCE BLOCK (308)

$N_{RB}^{D-}$ OR $N_{RB}^{DL}$ SUBCARRIERS (304)

$N_{RB}$ SUBCARRIERS (310)

$N_{symb}$ OFDM SYMBOLS (302)

FIG. 3

Logical
channels
(430)

PCCH   BCCH   CCCH   PCCH   DCCH        CCCH   DTCH

Transport
channels
(420)

PCH    BCH           DL-SCH             UL-SCH        RACH

Physical
channels
(410)

PBCH           PDSCH   PDCCH        PUSCH   PUCCH   PRACH

DCI

UCI

FIG. 4

| 500 | 501 | 502 | 503 | 504 | 505 | 506 | 507 | 508 | 509 | 510 | 511 | 512 | 513 |
|------|------|------|------|------|------|------|------|------|------|------|------|------|------|
| Sym 0 | Sym 1 | Sym 2 | Sym 3 | Sym 4 | Sym 5 | Sym 6 | Sym 7 | Sym 8 | Sym 9 | Sym 10 | Sym 11 | Sym 12 | Sym 13 |

FIG. 5

IDENTIFY NOISE COVARIANCE IN INITIAL RBG ~ 610

CONFIGURE NEW RBG AND IDENTIFY NOISE COVARIANCE IN NEW RBG ~ 620

PERFORM COVARIANCE SHRINKAGE SCHEME ~ 630

FIG. 6

ESTIMATE NOISE AND INTERFERENCE BASED ON RECEPTION SIGNAL, ESTIMATED CHANNEL, AND REFERENCE SIGNAL ~ 710

OBTAIN NOISE COVARIANCE PER INITIAL RBG ~ 720

FIG. 7

FIG. 8

**810**
$m = 0, l = 0$
$RBG^{new}(l) = \phi, N(l) = 0$

**820**
$1/Th1 < \beta^{RBG(m)} < Th1$

YES

**840**
Calculate $R_{nn}^{RBG^{new}}(l)$
$= R_{nn}^{RBG^{new}}(l) + R_{nn}^{RBG^{init}}(m)$
Combine $RBG^{new}(l) \leftarrow RBG^{new}(l) \cup RBG^{init}(m)$

**850**
$m = m + 1$
$N(l) = N(l) + 1$

NO

**830**
$R_{nn}^{RBG^{new}}(l) = R_{nn}^{RBG^{new}}(l)/(N(l)+1)$
$l = l + 1, m = m + 1$
$RBG^{new}(l) = \phi, N(l) = 0$

**860**
$m \geq N_{RBG}^{init}$

NO

**870**
$N_{RBG}^{new} = l$

FIG. 9

| RB index | User | Interference | Fix RBG(4RB) | Proposed RBG |
|---|---|---|---|---|
| 0 | | | | $RBG^{new}(0)$ |
| 1 | | | $RBG^{init}(0)$ | |
| 2 | | Interference | | $RBG^{new}(1)$ |
| 3 | UE 0 | Interference | | |
| 4 | | Interference | | |
| 5 | | | $RBG^{init}(1)$ | $RBG^{new}(2)$ |
| 6 | | | | |
| 7 | | | | |

FIG. 10A

FIG. 10B

| RB | User | Interf | Fix RBG(4RB) | Proposed RBG |
|---|---|---|---|---|
| 0 | | | $RBG^{init}(0)$ | |
| 1 | | | | |
| 2 | | | | |
| 3 | | | | |
| 4 | | | $RBG^{init}(1)$ | |
| 5 | | | | |
| 6 | | | | |
| 7 | UE 0 | Interference | | $RBG^{new}(0)$ |
| . | | | . | |
| . | | | . | |
| . | | | . | |
| 36 | | | $RBG^{init}(9)$ | |
| 37 | | | | |
| 38 | | | | |
| 39 | | | | |

FIG. 11A

FIG. 11B

OBTAIN SIGNAL ON PLURALITY OF RBS — 1210

DIVIDE PLURALITY OF RBS INTO PLURALITY OF FIRST RB GROUPS — 1220

OBTAIN FIRST NOISE COVARIANCE MATRIX RELATED TO PLURALITY OF FIRST RB GROUPS — 1230

DIVIDE PLURALITY OF RBS INTO PLURALITY OF SECOND RB GROUPS — 1240

OBTAIN SECOND NOISE COVARIANCE MATRIX RELATED TO PLURALITY OF SECOND RB GROUPS — 1250

OBTAIN INFORMATION CORRESPONDING TO SIGNAL BASED ON SECOND NOISE COVARIANCE MATRIX — 1260

FIG. 12

1300

TRANSCEIVER (1301)

PROCESSOR (1303)

MEMORY (1305)

BACKHAUL
TRANSCEIVER (1307)

FIG. 13

## INTERNATIONAL SEARCH REPORT

| | International application No. |
|---|---|
| | **PCT/KR2023/019385** |

**A.    CLASSIFICATION OF SUBJECT MATTER**

**H04B 7/08**(2006.01)i; **H04B 7/0413**(2017.01)i; **H04L 5/00**(2006.01)i; **H04L 25/02**(2006.01)i; **H04L 25/03**(2006.01)i

According to International Patent Classification (IPC) or to both national classification and IPC

**B.    FIELDS SEARCHED**

Minimum documentation searched (classification system followed by classification symbols)

H04B 7/08(2006.01); H04B 7/0426(2017.01); H04B 7/0456(2017.01); H04L 12/26(2006.01); H04L 5/00(2006.01); H04W 72/08(2009.01); H04W 72/54(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RB(resource block), 잡음 공분산(noise covariance), 대각 행렬(diagonal matrix), PUSCH(physical uplink shared channel)

**C.    DOCUMENTS CONSIDERED TO BE RELEVANT**

| Category* | Citation of document, with indication, where appropriate, of the relevant passages | Relevant to claim No. |
|---|---|---|
| Y | US 9276729 B2 (INTEL MOBILE COMMUNICATIONS GMBH) 01 March 2016 (2016-03-01)<br>See column 6, lines 24-26 and column 12, lines 3-6; claims 1, 10 and 12; and figure 1. | 1-15 |
| Y | US 2022-0060220 A1 (NOKIA TECHNOLOGIES OY) 24 February 2022 (2022-02-24)<br>See claims 8 and 11. | 1-15 |
| A | KR 10-2018-0012039 A (SAMSUNG ELECTRONICS CO., LTD.) 05 February 2018 (2018-02-05)<br>See paragraphs [0105]-[0112]; claim 1; and figure 2. | 1-15 |
| A | US 2021-0160886 A1 (QUALCOMM INCORPORATED) 27 May 2021 (2021-05-27)<br>See paragraphs [0075]-[0086]; claim 1; and figure 6. | 1-15 |
| A | US 2013-0215826 A1 (KALYANI, Sheetal et al.) 22 August 2013 (2013-08-22)<br>See paragraphs [0022]-[0027]; claim 1; and figure 1. | 1-15 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2024** | **08 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/019385**

| Patent document cited in search report | | | Publication date (day/month/year) | Patent family member(s) | | | Publication date (day/month/year) |
|---|---|---|---|---|---|---|---|
| US | 9276729 | B2 | 01 March 2016 | CN | 103874223 | A | 18 June 2014 |
| | | | | CN | 103874223 | B | 26 January 2018 |
| | | | | DE | 102013113447 | A1 | 26 June 2014 |
| | | | | US | 2014-0160949 | A1 | 12 June 2014 |
| US | 2022-0060220 | A1 | 24 February 2022 | CN | 113676281 | A | 19 November 2021 |
| | | | | CN | 113676281 | B | 05 May 2023 |
| | | | | EP | 3958476 | A2 | 23 February 2022 |
| | | | | EP | 3958476 | A3 | 02 March 2022 |
| | | | | US | 11387871 | B2 | 12 July 2022 |
| KR | 10-2018-0012039 | A | 05 February 2018 | KR | 10-2520883 | B1 | 13 April 2023 |
| | | | | US | 10841814 | B2 | 17 November 2020 |
| | | | | US | 2018-0035316 | A1 | 01 February 2018 |
| US | 2021-0160886 | A1 | 27 May 2021 | US | 11445518 | B2 | 13 September 2022 |
| | | | | WO | 2021-108701 | A1 | 03 June 2021 |
| US | 2013-0215826 | A1 | 22 August 2013 | US | 9231836 | B2 | 05 January 2016 |
| | | | | WO | 2011-154964 | A1 | 15 December 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1310

- FR 2252600